# EUROPEAN PATENT APPLICATION

(11) **EP 4 624 288 A1**
(43) Date of publication of application: **01.10.2025**
(21) Application number: 24166359.0
(22) Date of filing: 26.03.2024
(51) Int. Cl.: B60T 13/66, B60T 8/17, B60T 17/22, B61H 5/00, B61L 15/00

(54) **BRAKE ACTUATOR, BRAKE UNIT, RAIL VEHICLE, COMPUTER-IMPLEMENTED METHOD, COMPUTER PROGRAM AND NON-VOLATILE DATA CARRIER**

(71) Applicant: Dellner Bubenzer AB, 781 70 Borlänge (SE)
(72) Inventor: GUSTAVSSON, Claes-Göran, 723 53 VÄSTERÅS (SE); LARSSON, Lennart, 602 13 NORRKÖPING (SE); PRIM, Viktor, 811 61 SANDVIKEN (SE); LENNARTSSON, Svante, 791 46 FALUN (SE)
(74) Representative: Brann AB

(57) **Abstract**

A rail vehicle (100) contains a brake unit (200) and a brake actuator (120) with an emergency-brake interface (125) configured to receive at least one emergency brake signal (EB_{D}, EB_{P}, EB_{A}, EB_{WL}1) and in response thereto produce an electric brake-force signal (BF) to an electromechanical unit (230) in the brake unit (200). The brake unit (200), in turn, contains at least one pressing member (211), a rotatable member (110) being mechanically linked to at least one wheel (105) of the rail vehicle (100) and an electromechanical unit (230) configured to receive the electric brake-force signal (BF). In response to the electric brake-force signal (BF), the electromechanical unit (230) is configured to cause the at least one pressing member (211) to apply a braking force to the rotatable member (110) so as to retard the rotatable member (110) and the at least one wheel (105) being mechanically linked thereto. The emergency-brake interface (125) includes a first wireless interface (125_{WL}) configured to receive a first emergency brake signal (EB_{WL}1) of a wireless format. Thus, the brake unit (200) may be controlled remotely, for example from a control center.

## Description

### TECHNICAL FIELD

The present invention relates generally to emergency braking of rail vehicles. Especially, the invention relates to a brake actuator for a rail vehicle according to the preamble of claim 1, a brake unit including such a brake actuator and a rail vehicle, which, in turn, contains the brake unit. The invention also relates to computer-implemented method for controlling the brake unit. a computer program and a non-volatile data carrier storing such a computer program.

### BACKGROUND

Typically, railway systems rely on automatic train control (ATC) for controlling traffic and to maintain safety. ATC is a general class of train protection systems for railways that involves a speed control mechanism in response to external inputs. ATC may for example effect an emergency brake application if a driver does not react adequately to a signal at danger. ATC may also be used with automatic train operation (ATO) and is usually considered to be the safety-critical part of the railway system.

There are also emergency situations that for various reason cannot be controlled via the ATC. Fortunately, in many of these situations, a central management unit may still cause a runaway train to stop by simply cutting the power to the concerned track section. Nevertheless, this strategy is not always applicable. For example, in rail networks without ATC, it may be difficult to establish the exact location of the runaway train and thus determine which track section to de-electrify.

More importantly, rail vehicles that are powered by other energy sources than electricity from overhead lines, such as diesel locomotives or train cars, which have been inadvertently decoupled cannot be stopped by de-electrifying a track section. Here, alternative strategies must be applied.

PL 236903 B1 describes a system for remote emergency braking of rail vehicles and a method for remote emergency braking of rail vehicles. The system and method are used in emergency situations that threaten safety, or are used to prevent the possibility of a safety threat situation. The system has signal generators and signal receivers for stopping the rail vehicle. A central management unit triggers the signal generators to transmit wireless digital signals to the signal receivers located on the respective rail vehicles, for example to generate an unconditional braking signal. However, the unconditional braking signal may be overridden by a driver's command. Moreover, the unconditional braking signals do not affect rail vehicles located in excluded areas, such as tunnels, flyovers and bridges. Thus, even if the central management unit emits an unconditional braking signal it cannot be ensured that all rail vehicles receiving this signal are actually stopped.

US 2004/0104311 discloses a system for remotely shutting down and stopping a train consist that allows for increased safety and security of locomotives. A locomotive security module, a security control device, a transceiver, an engine control system and a brake control system are mounted directly to each locomotive. Associated remotely with these devices are a transceiver, a control computer and a locomotive interface unit. The locomotive security module is connected to the locomotive's engine control system, and the security control device is interconnected with the locomotive's braking system in a manner that when remotely triggered either an emergency braking application or an emergency engine shutdown will occur. Wherein enhancing the overall safety and security of a train consist is achieved.

Thus, emergency braking systems are known that are remotely controllable over a wireless interface. However, these systems cannot guarantee an unfailing braking of all types of rail vehicles under all conditions. For example, a non-driven vehicle that inadvertently becomes decoupled from a multi-membered cannot be stopped.

### SUMMARY

The object of the present invention is therefore to offer an improved solution that provides reliable emergency braking for all kinds of rail vehicles in all types of situations.

According to the invention, the object is achieved by a brake actuator a rail vehicle. The brake actuator has an emergency-brake interface configured to receive at least one emergency brake signal. In response to receiving the at least one emergency brake signal, the emergency-brake interface is further configured to produce an electric brake-force signal adapted to be received by an electromechanical unit of a brake unit on the rail vehicle, so that the brake unit may retard the rail vehicle and bring it to stop. In particular, the at least one emergency brake signal includes a first emergency brake signal of a wireless format. Moreover, the emergency-brake interface contains a first wireless interface configured to receive the first emergency brake signal.

The above brake actuator is advantageous because it renders it possible to remote control the brake unit itself. As a result, a railway system command center may cause emergency braking to be executed for any type of rail vehicle regardless of which other communication capabilities the rail vehicle has or does not have, and without risking interference from local systems onboard the rail vehicle, or due to undesired human intervention.

According to one embodiment of this aspect of the invention, the first wireless interface is associated with a first security functionality configured to exclusively allow the first emergency brake signal to result in that the electric brake-force signal is produced if a first set of authentication requirements is fulfilled. Thereby, any unauthorized control of the brake unit may be avoided.

According to another aspect of the invention, the object is achieved by a brake unit for a rail vehicle, which brake unit contains at least one pressing member, a rotatable member being mechanically linked to at least one wheel of the rail vehicle and an electromechanical unit, which, in turn, is configured to receive an electric brake-force signal, and in response thereto cause the at least one pressing member to apply a braking force to the rotatable member so as to retard the rotatable member and the at least one wheel that is mechanically linked thereto. Here, the brake unit also contains the above-described the brake actuator. The advantages of this brake unit are apparent for the same reasons as the indicated above with reference to the brake actuator.

According to one embodiment of this aspect of the invention, the brake unit contains a force sensor configured to produce a feedback signal representing the magnitude of a force applied by the at least one pressing member on the rotatable member. Further, the brake actuator is configured to receive the feedback signal, and based thereon generate a status message indicating whether a braking force specified by the electric brake-force signal has been applied to the rotatable member. Consequently, an external party, such as the central management unit may be notified about the fact that the rail vehicle has been brought to stop.

According to yet another aspect of the invention, the object is achieved by a rail vehicle containing a set of wheels, at least one brake unit, a brake handling unit and a communication system. In response to a brake command, the at least one brake unit is configured to apply a braking force to at least one wheel in the set of wheels so as to cause the rail vehicle to retard. The brake handling unit is arranged to generate the brake command based on at least one input signal. The communication system is arranged to send the brake command from the brake handling unit to the at least one brake unit. Preferably, the communication system contains at least one data bus configured to communicate control signals and/or status messages relating to an operation of the at least one brake unit. In particular, at least one of the at least one brake unit is represented by one instance of the proposed brake unit. The advantages of this rail vehicle are apparent for the same reasons as the indicated above with reference to the brake actuator.

According to one embodiment of this aspect of the invention, the at least one input signal also includes a second emergency brake signal of a wireless format, and the brake handling unit contains a second wireless interface configured receive the second emergency brake signal on the wireless format. Hence, in addition to individual brake actuators, the rail vehicle's emergency braking functionality may be controlled on an overall level.

According to another embodiment of this aspect of the invention, the second wireless interface is associated with a second security functionality configured to exclusively allow the second emergency brake signal to result in that the brake command is sent via the communication system if a second set of authentication requirements is fulfilled. Thereby, it may be avoided that the rail vehicle's emergency braking functionality is controlled in an unauthorized manner.

According to still another embodiment of this aspect of the invention, the second wireless interface is further configured transmit at least one of the first and second emergency brake signals on the wireless format. Consequently, the rail vehicle may forward a received emergency brake signal to one or more other recipients, for example in the form of additional brake actuators, internal and/or external to the rail vehicle itself, or to other rail vehicles.

According to yet another aspect of the invention, the object is achieved by a computer-implemented method, which is performed in a processing unit, which, in turn, is included in the above-proposed brake actuator. The method involves receiving at least one emergency brake signal via an emergency-brake interface. In response to receiving the at least one emergency brake signal, the method further involves producing an electric brake-force signal adapted to be received by an electromechanical unit of the brake unit. A first emergency brake signal of the at least one emergency brake signal is of a wireless format and the emergency-brake interface contains a first wireless interface. Additionally, the method involves receiving the first emergency brake signal via the first wireless interface. The advantages of this method, as well as the preferred embodiments thereof, are apparent from the discussion above with reference to the proposed brake actuator.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows a rail vehicle equipped with a brake actuator and a brake unit according to one embodiment of the invention;
- Figure 2: schematically illustrates a rail vehicle according to one embodiment of the invention; and
- Figure 3: illustrates, by means of a flow diagram, the general method according to the invention for controlling a brake actuator.

### DETAILED DESCRIPTION

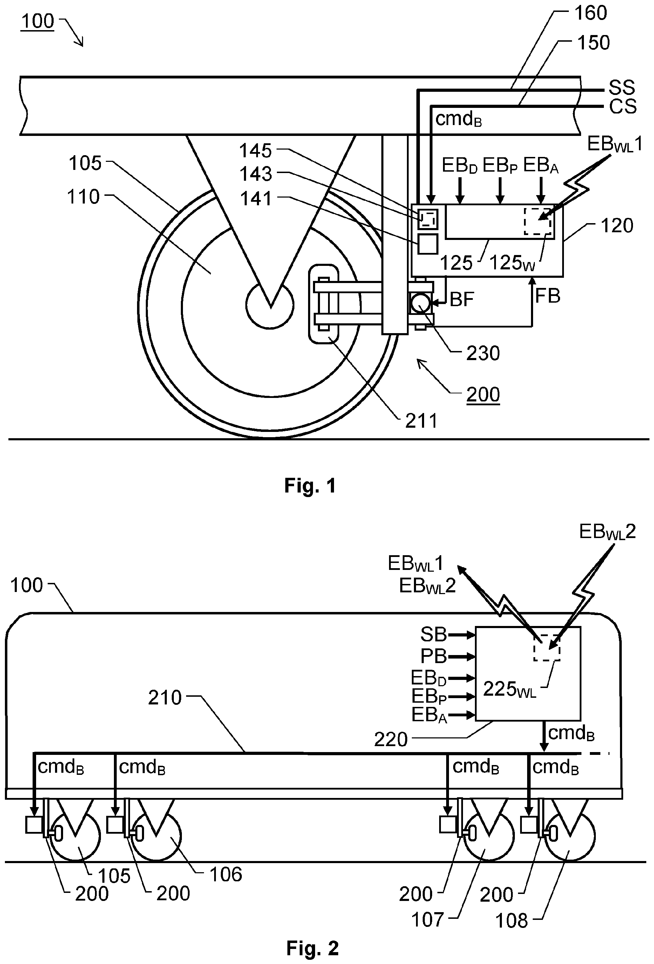

Figure 1 shows a rail vehicle 100, which is equipped with a brake actuator 120 and a brake unit 200 according to one embodiment of the invention.

The brake actuator 120 has an emergency-brake interface 125 configured to receive at least one emergency brake signal, here exemplified by EB_{D}, EB_{P}, EB_{A} and EB_{WL}1 respectively. In response to either of the emergency brake signals EB_{D}, EB_{P}, EB_{A} and/or EB_{WL}1 , the brake actuator 120 is configured to produce an electric brake-force signal BF, which is adapted to be received by an electromechanical unit 230 of a brake unit 200 on the rail vehicle 100.

In addition to the emergency brake signals EB_{D}, EB_{P}, EB_{A} and EB_{WL}1 the brake actuator 120 also has an input configured to receive a brake command cmd_{B}, for example in the form of a control signal CS via a data bus 150. In response to the brake command cmd_{B}, the brake actuator 120 is configured to control the brake unit 200 to apply a braking force to a wheels 105 of the rail vehicle 100, so as to cause the rail vehicle 100 to retard. For example a first emergency brake signal EB_{D} may originate from a driver's cabin, thus allowing a driver of the rail vehicle 100 itself, or a locomotive that pulls the rail vehicle 100, to control the brake unit 200 to execute an emergency braking operation, which aims at stopping the rail vehicle 100 as quickly as possible. A second emergency brake signal EB_{P} may originate from one or more handles/ levers on the rail vehicle 100, which handles/levers are operable by passengers. Thus, a passenger on the rail vehicle may control the brake unit 200 to execute the emergency braking operation. A third emergency brake signal EB_{A} may originate from an ATC function in the railway system in which the rail vehicle 100 operates. Thus, an external party, or functionality, may automatically or manually control the brake unit 200 to execute the emergency braking operation, for example if the driver of the rail vehicle 100 does not react adequately to a signal at danger.

According to the invention, one of the emergency brake signals has a wireless format, namely a first emergency brake signal EB_{WL}1, which may for example be conveyed to the rail vehicle 100 over a wireless communications network, such as a GSM (Global System for Mobile Communications) or 5G (the fifth-generation technology standard for cellular networks) network. To receive the a first emergency brake signal EB_{WL}1, the emergency-brake interface 125 includes a first wireless interface 125_{WL}.

Preferably, the first emergency brake signal EB_{WL}1 is generated by a control center, either automatically in response a monitoring function being triggered, or manually by a human operator, e.g. a train dispatcher. Depending on the distance between the source of the first emergency brake signal EB_{WL}1 and the position of the brake actuator 120, the first emergency brake signal EB_{WL}1 may also partly be transmitted on other formats over one or more intermediate wired and/or wireless networks, such as the Internet and/ or the PSTN (Public Switched Telephone Network).

According to one embodiment of the invention, the first wireless interface 125_{WL} is associated with a first security functionality, which is configured to exclusively allow the first emergency brake signal EB_{WL}1 to result in that the electric brake-force signal BF is produced if a first set of authentication requirements is fulfilled. For example, such security functionality may be accomplished via a safe addressing technology, e.g. as part of a virtual private network (VPN) that enables safe connection to be established between two endpoints, which, in this case, are the source of the first emergency brake signal EB_{WL}1 and the brake actuator 120 respectively. Thus, the risk of receiving unauthorized emergency brake signals in the brake actuator 120 can be avoided.

According to one embodiment of the invention, the brake unit 200 contains the brake actuator 120, at least one pressing member 211, for instance in the form of a pair of calipers, a rotatable member 110 and the electromechanical unit 230.

The rotatable member 110 is mechanically linked to at least one wheel 105 of the rail vehicle 100. For example, the rotatable member 110 may be a brake disc that is attached to the same wheel axle as the at least one wheel 105. The electromechanical unit 230 is configured to receive the electric brake-force signal BF, and in response thereto cause the at least one pressing member 211 to apply a braking force to the rotatable member 110. As a result, due to the mechanical link between them the rotatable member 110 and the at least one wheel 105 will be retarded together.

Preferably, the brake unit 200 also contains a force sensor configured to produce a feedback signal FB that represents the magnitude of a force applied by the at least one pressing member 211 on the rotatable member 110. Moreover, the brake actuator 120 is configured to receive the feedback signal FB, and based thereon generate a status message SS, which indicates whether or not a braking force specified by the electric brake-force signal BF has been applied to the rotatable member 110. Consequently, the brake unit 200 may for example emit a message that signals to a control center that the requested emergency braking has been effected.

The above-described embodiments of the invention are generally advantageous because these embodiments allow direct external control of each brake unit 200 in the rail vehicle 100, provided that the rail vehicle is located at a position where the wireless communications network has coverage. In the light of the good degree of coverage of today's wireless communications networks, a railway system command center may consequently execute emergency braking essentially at any track section of a railway network. While doing so, any local systems onboard braking systems on the rail vehicle 100 are bypassed. Naturally, this provides a very welcome security measure rail netwwork operators.

In addition to such low-level control it is often desirable to enable emergency braking of the rail vehicles on an overall level. Referring now to Figure 2, we will describe embodiments of the invention that enable remote high-level control of the rail vehicle's 100 brakes. Figure 2 schematically illustrates the rail vehicle 100 according to one embodiment of the invention.

Here, the rail vehicle 100 includes sets of wheels 105, 106, 107 and 108 respectively, where each set of wheels, in turn, contains a pair of wheels. Each of the sets of wheels 105, 106, 107 and 108 is associated with at least one respective brake unit 200. Typically one brake unit 200 is installed at each wheel in said pairs of wheels. In response to the brake command cmd_{B}, each brake unit 200 is configured to apply a braking force to the wheels in the set of wheels 105, 106, 107 and 108 so as to cause the rail vehicle 100 to retard, and possibly stop, depending on the braking force applied and the time period during which the braking force is applied. The rail vehicle 100 further includes a brake handling unit 220, which is arranged to generate the brake command cmd_{B} based on at least one input signal, exemplified by SB, PB, EB_{D}, EB_{P}, EB_{A} and EB_{WL}2 and respectively in Figure 2. Here, SB represents a service-brake signal from the driver's cabin, PB represents a parking-brake signal from the driver's cabin, EB_{D}, EB_{P} and EB_{A} represent the above-described first, second and third emergency brake signals respectively, whereas EB_{WL}2 is a second emergency brake signal of a wireless format. The second emergency brake signal EB_{WL}2 is preferably, however not necessarily, different from the first emergency brake signal EB_{WL}1. Provided that the second emergency brake signal EB_{WL}2 is different from the first emergency brake signal EB_{WL}1, the command center may decide whether to control one of more brake units 200 individually as described above with reference to Figure 1, or control a group of brake units 200 in common as will be described below. The rail vehicle 100 also includes a communication system 210 that is arranged to send the brake command cmd_{B} from the brake handling unit 220 to the brake units 200 so as to cause application of a braking force to the sets of wheels 105, 106, 107 and 108, which braking force is indicated by the input signals SB, PB, EB_{D}, EB_{P}, EB_{A} and EB_{WL}2 respectively.

According to one embodiment of the invention, the brake handling unit 220 has a second wireless interface 225_{WL}, which is configured receive the second emergency brake signal EB_{WL}2 on the wireless format.

Analogous to the first wireless interface 125_{WL}, the second wireless interface 225_{WL} is preferably associated with a second security functionality configured to exclusively allow the second emergency brake signal EB_{WL}2 to result in that the brake command cmd_{B} is sent via the communication system 210 if a second set of authentication requirements is fulfilled. Hence, the risk of unauthorized emergency brake signals being received in the brake handling unit 220 can be avoided. For example, such security functionality may be accomplished via a safe addressing technology, e.g. as part of a VPN that enables safe connection to be established between two endpoints, such as a source of the second emergency brake signal EB_{WL}2 and the brake handling unit 220 respectively.

According to one embodiment of the invention, the second wireless interface 225_{WL} is further configured transmit the first emergency brake signals EB_{WL1} and/or the second emergency brake signal EB_{WL}2 on the wireless format. For instance, the second wireless interface 225_{WL} may be configured to transmit the first and/or second emergency brake signals EB_{WL1} and/or EB_{WL}2 in response to receiving the second emergency brake signal EB_{WL}2. Consequently, any wirelessly received emergency brake signal may be propagated further to other rail vehicles in vicinity of the rail vehicle 100 as part of a command chain.

In addition to the above-mentioned data bus 150 for communicating control signals CS for example representing the brake command cmd_{P}, the communication system 210 may include a data bus 160 configured to communicate respective status messages SS relating to the operation of each of the brake units 200.

For example, the brake unit 200 may contain a stepper motor 230, a gear assembly (not shown), a position sensor (not shown) and a self-locking mechanism (not shown). As described above, in response to the brake command cmd_{B}, the brake actuator 120 may be configured to produce the electric brake-force signal BF. Here, the brake command cmd_{B} may, at least indirectly, specify a braking force to be applied, and a force sensor, for example arranged in the gear assembly may produce the feedback signal FB representing the magnitude of the force applied by the at least one pressing member 211 on the rotatable member 110. Preferably, the brake actuator 120 is further configured to receive the feedback signal FB, and based thereon generate a status message SS indicating whether a braking force specified by the electric brake-force signal BF has been applied to the rotatable member 110. As a result, the driver of the rail vehicle 100 may verify that for example a requested service braking has been executed.

Returning now to Figure 1, it is generally advantageous if the brake actuator 120 is configured to effect the above procedure in an automatic manner by executing a computer program. Therefore, the brake actuator 120 may include a processing unit 141 and a memory unit 145, i.e. non-volatile data carrier, storing a computer program 143, which, in turn, contains software for making the processing unit 141 execute the actions mentioned in this disclosure when the computer program 143 is run on the processing unit 141.

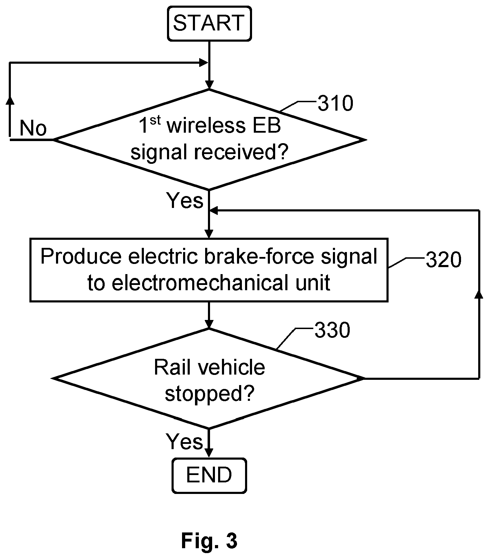

In order to sum up, and with reference to the flow diagram in Figure 3, we will now describe the computer-implemented method according to the invention for a brake unit, which method is performed in the processor 141 of the brake actuator 120.

A first step 310, checks if a first emergency brake signal has been received via the first wireless interface. If so, a step 320 follows; and otherwise, the procedure loops back and stays in step 310.

In step 320, an electric brake-force signal BF is produced, which electric brake-force signal BF is configured to cause an electromechanical unit 230 of a brake unit 200 to apply an emergency braking force, i.e. a maximal force that will bring the rail vehicle 100 to a stop as quickly as possible.

Thereafter, a step 330 checks if the rail vehicle 100 has stopped. If so, the procedure ends; and otherwise, the procedure loops back to step 320 for continued application of the braking force.

The process steps described with reference to Figure 3 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means.

Alternatively, the carrier may be an integrated circuit in which the program is embedded, the integrated circuit being adapted for performing, or for use in the performance of, the relevant processes.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A brake actuator (120) for a rail vehicle (100), which brake actuator (120) comprises an emergency-brake interface (125) configured to:
receive at least one emergency brake signal (EB_{D}, EB_{P}, EB_{A}, EB_{WL}1), and in response thereto
produce an electric brake-force signal (BF) adapted to be received by an electromechanical unit (230) of a brake unit (200) on the rail vehicle (100),
**characterized in that** the at least one emergency brake signal comprises a first emergency brake signal (EB_{WL}1) of a wireless format, and the emergency-brake interface (125) comprises a first wireless interface (125_{WL}) configured to receive the first emergency brake signal (EB_{WL}1).

2. The brake actuator (120) according to claim 1, wherein the first wireless interface (125_{WL}) is associated with a first security functionality configured to exclusively allow the first emergency brake signal (EB_{WL}1) to result in that the electric brake-force signal (BF) is produced if a first set of authentication requirements is fulfilled.

3. A brake unit (200) for a rail vehicle (100), which brake unit (200) comprises:
at least one pressing member (211),
a rotatable member (110) being mechanically linked to at least one wheel (105) of the rail vehicle (100), and
an electromechanical unit (230) configured to:
receive an electric brake-force signal (BF), and in response thereto
cause the at least one pressing member (211) to apply a braking force to the rotatable member (110) so as to retard the rotatable member (110) and the at least one wheel (105)
that is mechanically linked thereto,
**characterized in that** the brake unit (200) comprises the brake actuator (120) according to any one of claims 1 or 2.

4. The brake unit (200) according to claim 3, comprising a force sensor configured to produce a feedback signal (FB) representing the magnitude of a force applied by the at least one pressing member (211) on the rotatable member (110), and
the brake actuator (120) is further configured to:
receive the feedback signal (FB), and based thereon
generate a status message (SS) indicating whether a braking force specified by the electric brake-force signal (BF) has been applied to the rotatable member (110).

5. A rail vehicle (100) comprising:
a set of wheels (105, 106, 107, 108),
at least one brake unit (200) configured to, in response to a brake command (cmd_{B}), apply a braking force to at least one wheel in the set of wheels (105, 106, 107, 108) so as to cause the rail vehicle (100) to retard,
a brake handling unit (220) arranged to generate the brake command (cmd_{B}) based on at least one input signal (SB, PB, EB_{D}, EB_{P}, EB_{A}, EB_{WL}2), and
a communication system (210) arranged to send the brake command (cmd_{B}) from the brake handling unit (220) to the at least one brake unit (200),
**characterized in that** at least one of the at least one brake unit is represented by one instance of the brake unit (200) according to any one of claims 3 or 4.

6. The rail vehicle (100) according to claim 5, wherein:
the at least one input signal comprises a second emergency brake signal (EB_{WL}2) of a wireless format, and
the brake handling unit (220) comprises a second wireless interface (225_{WL}) configured receive the second emergency brake signal (EB_{WL}2) on the wireless format.

7. The rail vehicle (100) according to claim 6, wherein the second wireless interface (225_{WL}) is associated with a second security functionality configured to exclusively allow the second emergency brake signal (EB_{WL}2) to result in that the brake command (cmd_{B}) is sent via the communication system (210) if a second set of authentication requirements is fulfilled.

8. The rail vehicle (100) according to any one of claims 6 or 7, wherein the second wireless interface (225_{WL}) is further configured transmit at least one of the first and second emergency brake signals (EB_{WL1}; EB_{WL}2) on the wireless format

9. The rail vehicle (100) according to any one of claims 5 to 8, wherein the communication system (210) comprises at least one data bus (150, 160), which at least one data bus (150, 160) is configured to communicate at least one of control signals (CS) and status messages (SS) relating to an operation of the at least one brake unit (200).

10. A computer-implemented method for a brake unit (200) of a rail vehicle (100), which method is executed in a processing unit (101) of the brake actuator (120) and which method comprises:
receiving at least one emergency brake signal (EB_{D}, EB_{P}, EB_{A}, EB_{WL}1) via an emergency-brake interface (125), and in response to receiving the at least one emergency brake signal (EB_{D}, EB_{P}, EB_{A}, EB_{WL}1)
producing an electric brake-force signal (BF) adapted to be received by an electromechanical unit (230) of the brake unit (200),
**characterized by** a first emergency brake signal (EB_{WL}1) of the at least one emergency brake signal being of a wireless format, the emergency-brake interface (125) comprising a first wireless interface (125_{WL}), and the method comprising:
receiving the first emergency brake signal (EB_{WL}1) via the first wireless interface (125_{WL}).

11. A computer program (143) loadable into a non-volatile data carrier (145) communicatively connected to a processing unit (141), the computer program (143) comprising software for executing the method according to claim 10 when the computer program (143) is run on the processing unit (141).

12. A non-volatile data carrier (145) containing the computer program (143) of the claim 11.
